# EUROPEAN PATENT APPLICATION

(11) **EP 2 586 562 A2**
(43) Date of publication of application: **01.05.2013**
(21) Application number: 12190056.7
(22) Date of filing: 25.10.2012
(51) Int. Cl.: B23P 6/00, F01D 5/00

(54) **Methods for repairing turbine blade tips**

(30) Priority: 28.10.2011 US 201113283831
(71) Applicant: General Electric Company, Schenectady, NY 12345 (US)
(72) Inventor: Bunker, Ronald Scott, Niskayuna, NY New York 12309 (US)
(74) Representative: Cleary, Fidelma

(57) **Abstract**

A method for repairing a turbine blade (10) is described. The turbine blade (10) usually includes a root portion (20); an airfoil (12) having a pressure sidewall (24) and a suction sidewall (22); and a tip (18) disposed between the two sidewalls (22,24). The method includes the steps of removing substantially all of an upper region (42) of the tip (18), and then rebuilding only a portion (54) of the upper tip region (42). The portion that is rebuilt generally extends from the suction sidewall (22). Another embodiment is directed to a method for repairing or modifying a turbine blade (10) that includes a squealer rim (34) extending above both a pressure sidewall (24) and a suction sidewall (22) of the airfoil (12). The squealer rim portion (34) that extends from the pressure sidewall (24) is removed, while leaving in place the squealer rim portion that extends from the suction sidewall (22).

## Description

### BACKGROUND OF THE INVENTION

This invention relates generally to turbomachines, such as turbine engines. More specifically, the invention is directed to methods for repairing the airfoil components of turbomachines.

The typical design of most turbine engines is well-known in the art. They include a compressor for compressing air that is mixed with fuel. The fuel-air mixture is ignited in an attached combustor, to generate combustion gases. The hot, pressurized gases, which in modem engines can be in the range of about 1100 to 2000°C, are allowed to expand through a turbine nozzle, which directs the flow to turn an attached, high-pressure turbine. The turbine is usually coupled with a rotor shaft, to drive the compressor. The core gases then exit the high pressure turbine, providing energy downstream. The energy is in the form of additional rotational energy extracted by attached, lower pressure turbine stages, and/or in the form of thrust through an exhaust nozzle.

In the typical scenario, thermal energy produced within the combustor is converted into mechanical energy within the turbine, by impinging the hot combustion gases onto one or more bladed rotor assemblies. (Those versed in the art understand that the term "blades" is usually part of the lexicon for aviation turbines, while the term "buckets" is typically used when describing the same type of component for land-based turbines). The rotor assembly forms part of an overall stator-rotor assembly, in which rows of the rotor blades and rows of stator vanes on the stator assembly extend alternately across an axially oriented flow path, for "working" the combustion gases.

Each rotor blade includes an airfoil that includes a pressure side and a suction side. Each airfoil extends radially outward from a rotor blade platform. Each rotor blade also includes a dovetail that extends radially inward from a shank extending between the platform and the dovetail. The dovetail is used to mount the rotor blade within the rotor assembly to a rotor disk or spool.

A reduction in turbine engine efficiency results from the leaking of hot expanding combustion gases in the turbine across a gap between the rotating turbine blades and stationary seals or shrouds which surround the blades. The problem of sealing between such relatively rotating members to avoid loss in efficiency is very difficult in the turbine section of the engine, because of high temperatures and centrifugal loads.

One method of improving the sealing between a respective turbine blade and a shroud or stationary seal is by providing squealer type tips on turbine blades. A squealer tip includes a continuous peripheral end wall of relatively small height, typically surrounding and projecting outwardly from an end cap on the radially outer end of a turbine blade. (The end cap usually encloses one or more cooling air plenums in the interior of the blade). The squealer tip, as well as other tip designs and geometries, can often be very effective in minimizing the "clearance gap" between the bladed rotor assembly and the shroud, without interfering with the rotation of the rotor, or interfering with the structural integrity of the rotor or shroud.

Squealer tips and other types of rotor tips sometimes need to be repaired after the turbine engine has been in service for some time, due to the effects of erosion or high-temperature oxidation. The repair process usually involves removal of all or most of the material in the upper region of the tip, by various machining techniques. The tip region is then rebuilt, from both the pressure side and the suction side of the rotor blade. Various techniques are used to rebuild the tip region, such as welding processes or laser consolidation. In some cases, the blade tip is rebuilt with a material different from the original material. For example, the original blade may be cast with one type of nickel- or cobalt-based superalloy, while the repair-material may be another type of superalloy, e.g., one that permits more efficient welding to the original structure.

The repair process for the rotor tips can be time-consuming. A very precise shape for the new tip is required, and its performance properties have to meet rigorous standards. Moreover, the materials forming the new tip can be quite costly.

With these considerations in mind, it should be apparent that new processes for repairing the tips of blades for turbomachines would be welcome in the art. The techniques should be cost-efficient, while enabling the formation of a new blade tip with good performance characteristics. Moreover, the new techniques should be useful in the repair of squealer-tip blades, and should also be amenable to the use of a variety of materials for the new tips.

### BRIEF DESCRIPTION OF THE INVENTION

An aspect of this invention is directed to a method for repairing a turbine blade that includes a root portion; an airfoil having a pressure sidewall and a suction sidewall; and a tip disposed between the two sidewalls. The method comprises the steps of removing substantially all of an upper region of the tip, and then rebuilding only a portion of the upper tip region. The portion that is rebuilt generally extends from the suction sidewall.

Another aspect of the invention is directed to a method for repairing or modifying a turbine blade that includes a root portion; an airfoil having a pressure sidewall and a suction sidewall; and a tip disposed between the two sidewalls, wherein the tip includes a squealer rim portion extending above both the pressure sidewall and the suction sidewall. The method comprises the step of removing the squealer rim portion that extends from the pressure sidewall; while leaving in place the squealer rim portion that extends from the suction sidewall.

### BRIEF DESCRIPTION OF THE DRAWINGS

Embodiments of the present invention will now be described, by way of example only, with reference to the accompanying drawings in which:
FIG. 1 is a perspective view of an exemplary turbine blade known in the prior art.
FIG. 2 is a perspective, enlarged view of a portion of the turbine blade shown in FIG. 1.
FIG. 3 is a depiction of the tip region of a turbine blade during the repair process, according to some embodiments of the invention.
FIG. 4 is a depiction of the tip region depicted in FIG. 3 after repair, according to embodiments of this invention.

### DETAILED DESCRIPTION OF THE INVENTION

Any ranges disclosed herein are inclusive and combinable (e.g., compositional ranges of "up to about 25 wt%", or, more specifically, "about 5 wt% to about 20 wt%", are inclusive of the endpoints and all intermediate values of the ranges). Moreover, the terms "first," "second," and the like, herein do not denote any order, quantity, or importance, but rather are used to distinguish one element from another. The terms "a" and "an" herein do not denote a limitation of quantity, but rather denote the presence of at least one of the referenced items. Moreover, approximating language, as used herein throughout the specification and claims, may be applied to modify any quantitative representation that could permissibly vary without resulting in a change in the basic function to which it is related. Accordingly, a value modified by a term or terms, such as "about," is not limited to the precise value specified. In some instances, the approximating language may correspond to the precision of an instrument for measuring the value.

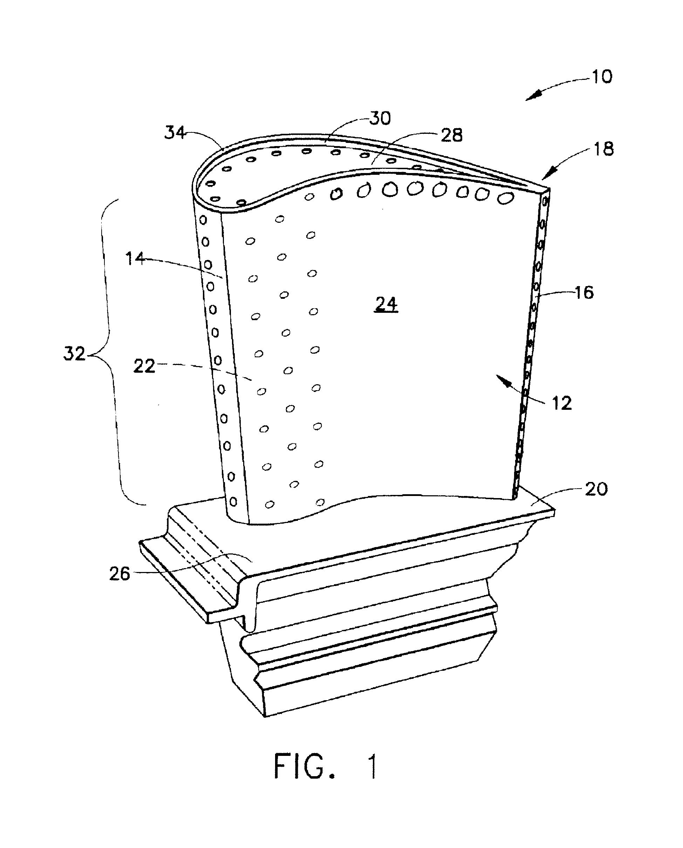

FIG. 1 depicts an exemplary turbine blade 10 for a gas turbine engine, in which a squealer tip is used, as described below. The turbine blade 10 comprises an airfoil 12, having a leading edge 14, a trailing edge 16, a tip 18, a platform 20, a convex suction sidewall 22, and a concave pressure sidewall 24. The pressure sidewall and the suction sidewall are often, but not always, joined together at both the leading edge and the trailing edge. An arcuate inner platform 26 is attached to the platform 20 of the airfoil 12.

Often, this type of airfoil 12 is made by a casting technique. In manufacturing the airfoil 12, the pressure and suction sidewalls 24 and 22, a tip cap 28, and a squealer tip 30 are integrally cast as a one-piece airfoil body 32. The airfoil body 32 is typically cast from conventional nickel- or cobalt-based superalloys (and sometimes iron-based superalloys) that have high-temperature strength properties suitable for the intended operating conditions. Examples of known materials for constructing the airfoil body 32 include Rene™ 77, Rene™ 77, Rene™ 80, Rene™ 142, and Rene™ N4 and N5 nickel-based alloys. However, in other situations, a turbine blade is cast without a tip cap, or only with a portion of the tip cap. The full tip cap or the remaining portion thereof can then be welded or brazed in place, e.g., using cast pieces of the same material as the rest of the airfoil.

A squealer tip extension or "squealer rim" extends radially outward from the tip cap 28. As alluded to previously, the squealer rim has a shape and size sufficient to reduce the flow of hot combustion gas across the tip, while still ensuring the necessary clearance with any opposing stator surface. As further described below, the rim can sometimes be made from a material different than that used to form the rest of airfoil 12. As an example, the rim can be formed from an alloy that exhibits superior high-temperature oxidation resistance, as compared to the base alloy of the airfoil. In general, tip 18, and tip extension or rim 34 (when present) are the regions of the airfoil that are most susceptible to the wear and damage mentioned previously.

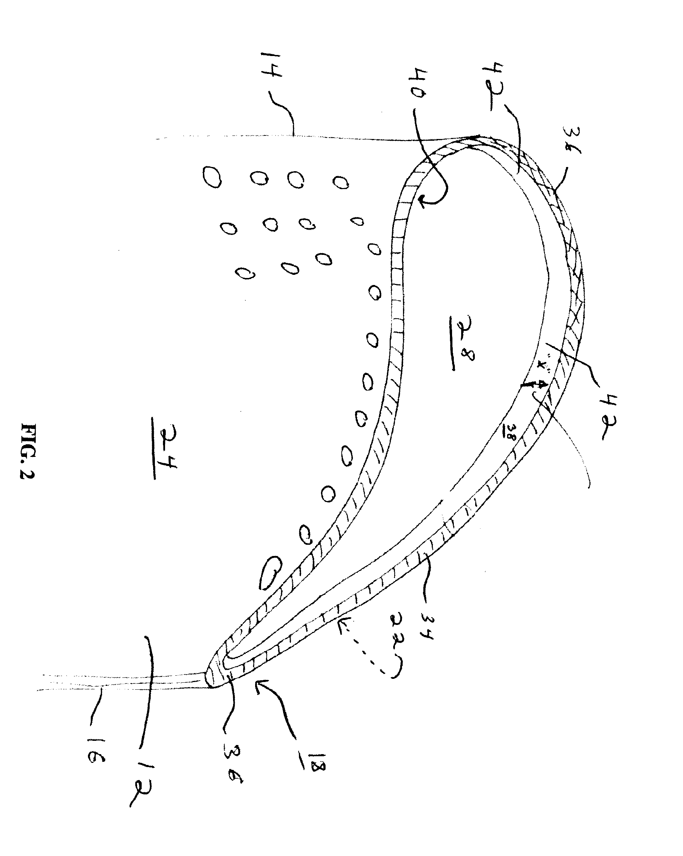

FIG. 2 is perspective, enlarged view of the upper portion of airfoil 12, as depicted in FIG. 1, i.e., prior to any treatment according to this invention. (The orientation of the airfoil has been shifted slightly, for better viewing of details. Moreover, film cooling holes have been omitted in some locations, e.g., the tip cap, to simplify the description). Squealer tip extension or rim 34 extends around the entire outer periphery 36 of the blade tip 18. As alluded to previously, the squealer tip can be incorporated into the airfoil by a number of techniques, e.g., casting in place during manufacture, or welding to a previously-formed airfoil.

As shown in FIG. 2, the squealer rim rises above the surface of tip cap 28 by a selected height "x", typically of approximately uniform height within a selected tolerance range. In other words, the rim extends upwardly as the inner surface 38 of the suction sidewall 22, and as the inner surface 40 of pressure sidewall 24. Using leading edge 14 and trailing edge 16 as approximate boundaries along the rim 34, the rim rising about the suction sidewall can be thought of as the "suction side portion", while the rim rising about the pressure sidewall can be thought of as the "pressure side portion".

The height dimension "x" (i.e., the squealer rim height or tip cavity depth) is part of the overall design of the airfoil, and is determined by various factors, such as the required "clearance gap" between the blade tip and the stationary assembly, e.g., the shroud. Usually, height dimension "x" is about 2% to about 6% of the overall height or radial span of the airfoil 12, i.e., above platform 20 in FIG. 1. As a non-limiting illustration for an airfoil of an industrial, land-based turbine, having an overall length (height) of about 18 cm, the height dimension "x" is usually in the range of about 3.5 mm to about 11 mm. (Aviation turbines typically have different dimensions). The portion of the tip rising above tip cap 28 is designated herein as the "upper tip region" 42.

According to embodiments of this invention, the upper tip region 42 is substantially removed when repair of that part of the turbine blade is desired. In some cases, protective coatings (e.g., conventional metallic and/or ceramic coatings) that may cover the blade tip are first removed by known procedures. Non-limiting examples of coating removal techniques include treatment with a removal solution, e.g., a caustic material, along with grit-blasting.

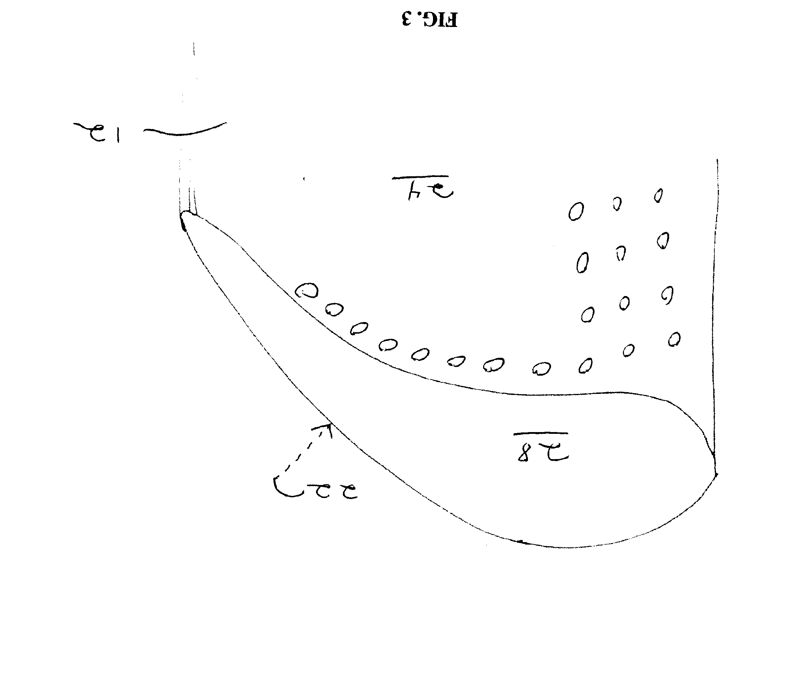

The upper tip region can then be removed by additional techniques. Examples include various machining techniques, such as milling and electric discharge machining. Laser-based cutting techniques can also be used, as well as water jet-cutting. Those skilled in the art will be able to determine the most appropriate technique or combinations of techniques for a given type of blade. In most embodiments, substantially all of the upper tip region is removed, i.e., both the suction side portion and the pressure side portion. FIG. 3 depicts airfoil 12, after removal of substantially all of the upper tip region, leaving the fully-exposed tip cap 28. The tip cap and surrounding peripheral area can then be cleaned and polished or smoothened by conventional techniques. Other conventional repairs can also be made at this time, e.g., crack repairs.

After the surface preparation of the peripheral area, the repair is continued by rebuilding a portion of the upper tip region According to embodiments of this invention, the only portion of the upper tip region that is rebuilt is the portion extending from suction sidewall 22, i.e., the suction side portion of the rim. The repair is carried out to provide a desired net-shape for this portion of the tip region. The desired shape may be the original net-shape of the tip region, or some selected variation from that shape.

A number of techniques can be used for rebuilding the tip region. Examples include welding processes, or laser-based deposition techniques. Non-limiting examples of welding processes include gas tungsten arc welding (GTAW) techniques or tungsten inert gas (TIG) welding techniques. Some variations or sub-categories of these techniques are referred to as "SWET" (superalloy welding at elevated temperatures), or wrap-welding. Other suitable techniques include shielded metal arc welding

(SMAW); gas metal arc welding (GMAW), sometimes referred to as metal inert gas or MIG welding; flux-cored arc welding (FCAW or FCA); oxy-fuel welding; and plasma-transferred arc (PTA) welding.

Non-limiting examples of the laser-based techniques include laser consolidation, sometimes referred to as "laser cladding". A related technique that is sometimes considered to be a category of laser consolidation is referred to as direct metal laser sintering. Those skilled in the art are familiar with the relevant details regarding the laser-based techniques, as well as the welding techniques, when working with superalloy materials typically used for turbine blades.

As mentioned previously, the material being used for rebuilding the desired tip region may be different from the material used to form the airfoil, e.g., when it was first cast. As an example, the new material may be one that provides better welding capabilities for attachment to the existing tip. The new material may also be one that provides better strength or oxidation resistance at high temperatures, for example. (Those skilled in the art understand that the performance requirements for the tip region may often differ from the requirements for the rest of the airfoil structure). In some cases, the new material may also be a superalloy, albeit one that differs compositionally from the original material. In other cases, the new material may be formed of different types of alloys, as described, for example, in U.S. Patent 7,282,681 (T. Kelly), which is incorporated herein by reference. (As alluded to previously, and shown, for example, in the Kelly patent, the airfoil can include a number of film cooling holes and other types of holes and channels. These features can be located in any of the airfoil surfaces, including the tip cap. The shape, size, and particular location of the holes or other cavities can be readily determined by those skilled in the art. Methods for the formation of the holes (e.g., laser drilling) are also well-known in the art.

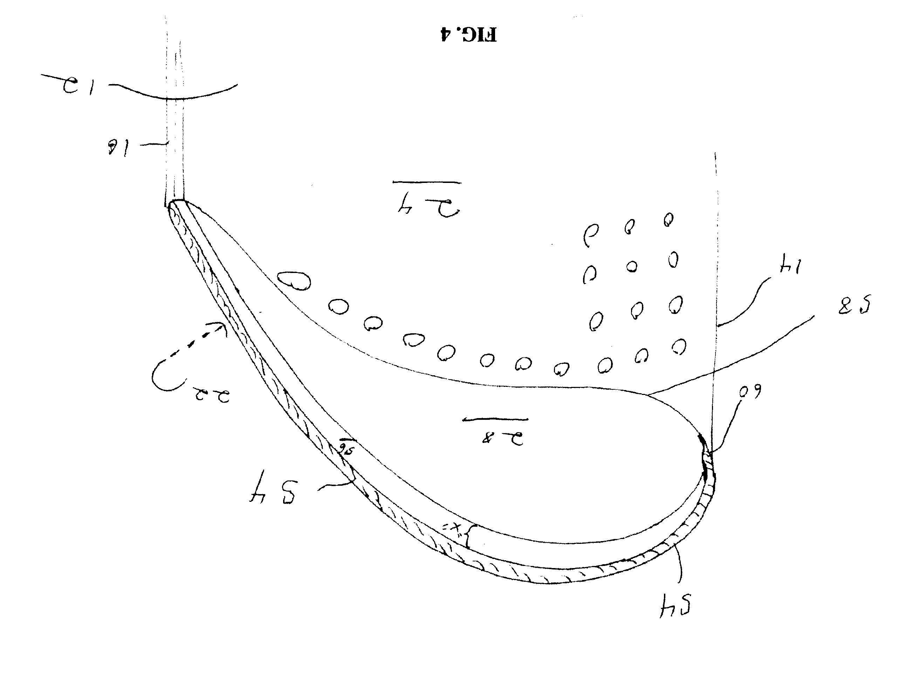

FIG. 4 depicts turbine airfoil 12, after the repair has been completed. (Identical reference numerals are used, except where new or re-formed features are designated). The figure depicts the new suction side portion 54 of the rim, extending from tip cap 28 along suction sidewall 22. In other words, the built-up material forms a new, extended inner wall/inner surface 56 of the suction sidewall, rising from tip cap 28. There is, purposefully, no rebuilt region extending from the opposing side, i.e., above pressure sidewall 24; and peripheral region 58 remains as depicted in FIG. 3.

In some embodiments, a relatively small transition region 60 is formed, which can be a slope or "bank" in the general vicinity of leading edge 14. The slope can extend from the new rim 54, down to the peripheral region 58 above pressure side 24, which has no rim. The transition region can serve to eliminate sharp features that may sometimes be aerodynamically undesirable; or that may create higher stress concentration factors. The region can be formed when the suction-side rim is rebuilt, and/or can be shaped (e.g., by grinding or milling) afterward.

It should be understood that the inventive concepts described herein may be applicable to a variety of airfoil tip designs. As one non-limiting example, an airfoil tip like that described in U.S. Patent 5,261,789 (Butts et al, incorporated herein by reference) may be repaired or modified according to embodiments of this invention. The patent of Butts et al describes a turbine blade that includes a type of squealer rim extending from both the suction and pressure surfaces of the airfoil, along with the presence of a recessed tip wall, that forms a tip shelf within the outer surface of the pressure wall. It is expected that a repair to such a blade, as described above, would result in aerodynamic properties that are at least comparable to those of the blade design described in the patent.

In general, it should be emphasized that there are a number of variations to the general, squealer tip design of FIG. 1 As an example, in some tip designs, the pressure side rim and suction side rim do not merge at the trailing edge (e.g., edge 16 in FIG. 1), but instead remain separated by a relatively small gap. In other designs, the pressure side rim may end (i.e., in the peripheral direction toward the trailing edge) prior to the terminus of the trailing edge. The repair process described herein should be amenable to these and other variations on squealer tip design.

For other embodiments of the invention, the blade tip may in fact terminate with a squealer rim completely around the blade's peripheral area, i.e., extending from both the pressure side and the suction side of the airfoil. If some modification or repair of the tip region is required, the inventive steps may comprise simply removing the squealer rim portion that extends from the pressure side of the airfoil, and leaving the rim portion that extends from the suction side (and repairing the suction-side rim, if necessary, during or after removal of the squealer rim portion above the pressure sidewall). As described previously, and in the Example which follows, the presence of the squealer rim above only the suction side of the airfoil still provides advantageous properties and performance for many end use applications.

### EXAMPLES

Experiments were carried out to demonstrate the aerodynamic performance of turbine blade tips according to some embodiments of this invention. One sample included a turbine blade tip with a conventional squealer tip geometry, i.e., similar to that of FIG. 2, with a squealer rim extending completely around the periphery of the blade tip. Another sample, in line with the present invention, included a turbine blade tip in which only the suction side portion of the squealer rim was present, i.e., like that of FIG. 4.

The samples were subjected to comparative, aerodynamic tests, in which streams of hot gas were directed over the tip region of a row of blades having each configuration. The aerodynamic pressure loss (i.e., the tip hot gas leakage) after passage over the blades was measured. The lab test data showed substantially no additional aerodynamic pressure loss for the sample having only the suction side squealer rim, as compared to the conventional blade sample.

Moreover, the blade repair in which only the suction squealer rim is rebuilt is expected to reduce overall repair times by as much as about 40%. Furthermore, a substantial amount of relatively expensive repair material is saved in this type of repair.

The present invention has been described in terms of some specific embodiments. They are intended for illustration only, and should not be construed as being limiting in any way. Thus, it should be understood that modifications can be made thereto, which are within the scope of the invention and the appended claims. Furthermore, all of the patents, patent applications, articles, and texts which are mentioned above are incorporated herein by reference.

## Claims

1. A method for repairing a turbine blade (10) that includes a root portion (20); an airfoil (12) having a pressure sidewall (24) and a suction sidewall (22); and a tip (18) disposed between the two sidewalls (22,24); comprising the steps of
removing substantially all of an upper region (42) of the tip (18), and then rebuilding only a portion (54) of the upper tip region (42), said portion (54) extending from the suction sidewall (22).

2. The method of claim 1, wherein the pressure sidewall (24) and the suction sidewall (22) are joined together at both a leading edge (14) and a trailing edge (16); and wherein the tip region (42) includes a squealer tip (30).

3. The method of claim 2, wherein the squealer tip (30) includes a continuous peripheral end-wall (34) of relatively small height, surrounding and projecting outwardly from the tip region.

4. The method of any of claims 1 to 3, wherein the rebuilding of the tip region (18) extending from the suction sidewall (22) is carried out by a technique comprising welding or a laser deposition process.

5. The method of claim 4, wherein the welding process comprises tungsten arc welding (GTAW), tungsten inert gas (TIG) welding, gas metal arc welding (GMAW), shielded metal arc welding (SMAW); flux-cored arc welding (FCAW); plasma-transferred arc (PTA) welding, oxy-fuel welding; and combinations thereof.

6. The method of any of claims 1 to 5, wherein the turbine blade (10) is formed of a material comprising a superalloy.

7. The method of claim 6, wherein the superalloy comprises nickel, cobalt, iron, or combinations thereof.

8. The method of claim 6 or 7, wherein the portion (54) of the upper tip region (42) that is rebuilt comprises a metallic material different from the superalloy material that was removed.

9. The method of any preceding claim, wherein the tip region (18) is **characterized by** a selected net shape upon its initial fabrication; and wherein the portion (54) of the upper tip region (42) that is rebuilt has substantially the same net-shape as the shape of initial fabrication.

10. The method of any preceding claim, wherein the turbine blade (10) is a component of a gas turbine engine (10).

11. A method for repairing or modifying a turbine blade (10) that includes a root portion (20); an airfoil having a pressure sidewall (24) and a suction sidewall (22); and a tip (18) disposed between the two sidewalls (22,24), wherein the tip (18) includes a squealer rim portion (34) extending above both the pressure sidewall (24) and the suction sidewall (24);
said method comprising the step of removing the squealer rim portion (34) that extends from the pressure sidewall (24); while leaving in place the squealer rim portion that extends from the suction sidewall (22).

12. The method of claim 11, wherein the squealer rim portion (34) that extends from the suction sidewall (22) requires repair to conform to a selected net-shape, and the repair is carried out during or after the removal of the squealer rim portion (34) extending above the pressure sidewall (24).

13. The method of claim 12, wherein the repair is carried out by a technique comprising welding or laser deposition.
